# EUROPEAN PATENT APPLICATION

(11) **EP 4 471 340 A1**
(43) Date of publication of application: **04.12.2024**
(21) Application number: 24178980.9
(22) Date of filing: 30.05.2024
(51) Int. Cl.: F24F 7/02, F24F 13/08, A01K 1/00, F24F 7/003, F24F 7/00

(54) **A WIND HOOD FOR A VENTILATION INLET OF A VENTILATED SPACE**

(30) Priority: 31.05.2023 NL 2034961
(71) Applicant: Fancom B.V., 5981 XW Panningen (NL)
(72) Inventor: KURVERS, Richard Joseph Mathijs, 5981 XW Panningen (NL); PIJNENBURG, Kris Johannes Hendrikus, 5981 XW Panningen (NL)
(74) Representative: V.O.

(57) **Abstract**

A wind hood for a ventilation inlet of a ventilated space, the wind hood comprising a housing, wherein the housing comprises:
- a hood outlet;
- a first set of hood inlets comprising two hood inlets;
- a second set of hood inlets comprising two hood inlets;
wherein at least one air-flow path is provided between:
- the hood outlet and at least one of the hood inlets of at least one of the first and second set of hood inlets;
- at least one hood inlet of the at least one of the first and second set of hood inlets and at least one other hood inlet of at the first and second set of hood inlets.

## Description

The invention relates to a wind hood for a ventilation inlet of a ventilated space, an architectural element for a barn comprising a wind hood and a barn comprising said architectural element.

Barns are used for holding livestock or growing plants or flowers. A barn typically comprises a number of walls which support a roof. Between the walls and the roof, a ventilated space for holding animals or plants is obtained. For allowing an air-flow into the ventilated space of the barn, one or more ventilation inlets are provided through the walls and/or the roof. For allowing an air-flow out of the ventilated space of the barn, one or more ventilation outlets are provided through the walls and/or the roof. Ventilation of the ventilated space may be performed by allowing the air-flow into the ventilated space as well as allowing the air-flow out of the ventilated space, thereby replacing air in the ventilated space with fresh outside air. Outside air may comprise more oxygen and less CO2 than the air inside the ventilated space, for example due to the presence of animals in the ventilated space.

For controlling ventilation of the ventilated space in the barn, a ventilation system is provided. The ventilation system may comprise one or more fans for displacing air. Using the fans, an air-flow through a ventilation inlet and/or a ventilation outlet may be constituted.

In use, the ventilation inlets are exposed to the environment outside the barn. Outside the barn, wind may present causing air-flows as displacements of air. If wind would flow into a ventilation inlet directly, the ventilation system may be unable to control the ventilation of the ventilation space due to the uncontrollable air-flow caused by the wind. To prevent the wind from flowing direct into a ventilation inlet, a wind hood is used.

A typical wind hood comprises a housing with an air inlet and an air outlet. The air outlet is aligned with the ventilation inlet of the barn, and the air inlet is oriented downwards toward the ground. Typically, wind does not flow upwards directly into the air inlet, and as such, the ventilation inlet is protected by the wind hood from direct influx of wind.

A drawback of known wind hoods may be that they can have a large air flow resistance, or drag, between the hood inlet and the hood outlet. The air flowing through these wind hoods can be turbulent, especially at higher wind velocities. This may require the fans of the ventilation system to use more power to constitute sufficient ventilation of the ventilated space, or may result in an undesired high level of ventilation. Furthermore, it has been observed that in known wind hoods, pressure may build up inside the housing of the wind hood for example due to high wind velocities or sudden gusts of wind. It has been observed that this pressure build-up may negatively impact flow of air into the barn, and/or make it harder to maintain a preferred air flow by the ventilation system.

Dutch patent NL2027745 describes a wind hood with improved air flow capacity that is less sensitive to high wind velocities or sudden gusts of wind. The wind hood comprises a hood outlet, a first hood inlet and a second hood inlet. At least one air-flow path is provided between the hood outlet and the first hood inlet, the hood outlet and the second hood inlet and between the first hood inlet and the second hood inlet. Providing for a first hood inlet that is in fluid communication with a second hood inlet prevents the built up of pressure due to wind inside the housing as excess pressure may leave the housing through an inlet. With a reduced pressure build-up, the ventilation system in the barn may be disturbed less by the wind outside the barn.

However, there still exists a need to further reduce the pressure build-up in the wind hood in order to improve the flow of air into the barn and make it easier to maintain a preferred air flow by the ventilation system.

A first aspect of the disclosure relates to a wind hood for a ventilation inlet of a ventilated space. The wind hood comprises a housing, wherein the housing comprises a hood outlet, a first set of hood inlets comprising two hood inlets, and a second set of hood inlets comprising two hood inlets. At least one air-flow path is provided between the hood outlet and at least one of the hood inlets of at least one of the first and second set of hood inlets. Furthermore, at least one air-flow path is provided between at least one hood inlet of the at least one of the first and second set of hood inlets and at least one other hood inlet of the first and second set of hood inlets.

In general, a set of hood inlets may be defined as a plurality of hood inlets, in a relative close proximity to each other, e.g. the hood inlets are provided in a same general area of the wind hood, e.g. a left or right side of the hood. Optionally, the hood inlets may be substantially shaped similar, e.g. having comparable dimensions such as opening surface. In general, a flow-through area of the hood inlets of the first set of hood inlets and a flow-through area of the hood inlets of the second set of hood inlets may be essentially the same. Essentially the same may imply within 10% or even within 20% difference between different hood inlets.

Providing a first and a second set of hood inlets, wherein each set comprises two hood inlets, at least 10 flow-paths for air are provided: from the first hood inlet of the first set to the second hood inlet of the first set, from the first hood inlet of the second set to the second hood inlet of the second set, from the first hood inlet of the first set to the first hood inlet of the second set, from the second hood inlet of the first set to the second hood inlet of the second set, from the first hood inlet of the first set to the second hood inlet of the second set, from the second hood inlet of the first set to the first hood inlet of the second set, and from each of the hood inlets to the hood outlet. By providing multiple flow paths, e.g. more than the three flow paths of the prior art, pressure built up in the housing due to wind may be even further reduced as excess pressure may leave the housing through any outlet. With a reduced pressure built up, the ventilation system may be disturbed less by the wind outside the barn.

In general, an air-flow path may be defined as a confined space, conduit or funnel through which air may flow. An air-flow path may for example be confined by a part of a housing or an air flow guidance member. An air-flow path may be a three-dimensional volume in which other solid matter is absent such that air may flow through the volume in any direction.

In general, a hood inlet or hood outlet may be any through-hole through the housing, or may be formed by any opening in the housing or by local absence of the housing. Individual hood inlets of the first and second set of hood inlets may be similarly shaped, or may have a different shape and/or flow-through area. The flow-through area of a hood inlet or hood outlet may be delimited by a perimeter, which perimeter may have any shape, such as rectangular, square, circular, any other polygon, or any combination thereof. The perimeter may for example be formed at least partially by the housing and/or part of the barn through which a ventilation inlet is provided, such as a wall or roof. Apart from the hood outlet and the first and second set of hood inlets, the housing may be substantially airtight, in particular when connected to the wall or roof of the barn.

In use, any number of the hood inlets may thus be an inlet for air, and the other of the hood inlets may be an outlet for air out of the housing of the wind hood.

Instead of a barn, the wind hood may be readily applied to any other ventilation inlet of any other building, such as a factory, industrial building, agricultural building such as a greenhouse, a dwelling, apartment building, or any other building in general.

Preferably, any housing disclosed herein is mountable to a wall, for example an essentially vertical wall, for example a vertical wall of a barn. Additionally, or alternatively, for any wind hood with a front cover disclosed herein, at least part of the front cover may protrude into the housing towards the hood outlet. More in general, part of the housing opposite the hood outlet may protrude inwards towards the hood outlet.

The first set of hood inlets and the second set of hood inlets can face in different directions out of the housing. Facing in different directions may imply that a normal vector of a flow-through area of any of the first set and second set of hood inlets oriented away from the housing does not intersect with a flow-through area of the other set of hood inlets. Preferably, the hood inlets of at least one of the first and second set of hood inlets can face in different directions out of the housing, preferably in different directions that are substantially perpendicular relative to each other. When all hood inlets face in directions perpendicular relative to each other out of the housing, multiple wind hoods can be provided on a barn relatively close to each other without causing interference compared to embodiments in which hood inlets of a first wind hood is aligned with and faces the wind hood inlet of a second wind hood. For example, interference may occur when wind enters a first wind hood via a first wind hood inlet and leaving the first wind hood via a second wind hood outlet which is aligned and facing a first wind hood inlet of a second wind hood. In such a scenario, a relative high built up of pressure may occur inside the interfering wind hoods and thereby a ventilation system of a barn on which the interfering wind hoods are provided may be effected negatively.

When the sets of hood inlets face in different directions out of the housing, only one set of hood inlets may directly face the direction of the wind. As such, the other set of hood inlets may act as an outlet for excess pressure built up in the housing. This effect may be further improved by having the hood inlets of at least one of the sets of hood inlets face in different directions out of the housing.

In general, a hood inlet or hood outlet may face in a direction corresponding to a normal vector of a flow-through area of said hood inlet or hood outlet. When a perimeter surrounding a hood inlet or a hood outlet does not define a flat flow-through area, the normal vector may be an average normal vector of the non-flat flow-through area. In general, a normal vector of a flow-through area of at least one hood inlet of at least one of the first and second set of hood inlets may be oriented at an angle relative to a vertical direction and relative to a horizontal direction. The angle relative to the vertical direction and relative to the horizontal direction may be approximately 45 degrees, for example between 30 degrees and 60 degrees, in particular between 40 degrees and 50 degrees.

The ventilation system may comprise a control valve for controlling a flow-through area of a ventilation inlet of the barn, or for at least controlling a flow of air through the ventilation inlet. Especially when the control valve is in a substantially closed position, the pressure build-up in the wind hood may be high if only one hood inlet, i.e. no further hood inlets, are provided, since air cannot easily flow through the ventilation inlet and thus not through the hood outlet which is fluid communication with the ventilation inlet.

The hood outlet can be provided between the first set of hood inlets and the second set of hood inlets. As a result, the air-flow path between any of the hood inlets of the first set of hood inlets and any of the hood inlets of the second set of hood inlets may pass the hood outlet. The air-flow paths may as such partially overlap. For air flowing into any of the hood inlets of the first set of hood inlets, at least one hood inlet of the second set of hood inlets may be further downstream than the hood outlet.

At least one hood inlet of the first and second set of hood inlets can be oriented at an angle relative to the hood outlet - i.e. the flow-through area of the first hood inlet is not parallel to the flow-through area of the hood outlet. The wind hood can further comprise an air guidance member for guiding air between the at least one hood inlet of the first and second set of hood inlets and the hood outlet.

An air guidance member may on its own or for example together with the housing and/or any other air guidance member(s) form a conduit through which air may flow. When the at least one hood inlet is oriented at an angle relative to the hood outlet, no straight air-flow path may be present between the corresponding at least one hood inlet and the hood outlet. An air guidance member may guide the air flow between the corresponding at least one hood inlet and the hood outlet.

As an even further option, multiple air flow guidance members may be positioned in the housing, and as such multiple, in particular separate, air-flow paths may be provided between any of the hood inlets and the hood outlet. The multiple air-flow paths may be constrained by one or more air flow guidance members and the housing.

Any air flow guidance member may be embodied as an insert connectable to the housing. Any air flow guidance member may extend between a top cover and a bottom cover of the housing. Any air flow guidance member may extend approximately from a flow through area of one of the hood inlets to a flow through area of the hood outlet.

By guiding an air-flow with the one or more air flow guidance member, a more laminar air-flow may be obtained. A more laminar air-flow may result in less resistance for air to move through the wind hood.

The housing can comprise a top cover, a bottom cover opposite to the top cover, and two side walls provided opposite of each other. Each of the two side walls can be provided between a corresponding set of hood inlets. Top, bottom and side here refers to the state of the housing in typical use, i.e. when the wind hood is connected to wall or roof of a barn. The hood outlet can be positioned opposite a front cover between the top cover and the bottom cover. Hence, in use, the front cover may be positioned opposite to the ventilation inlet of the wall or roof.

When at least part of the front cover protrudes into housing towards the hood outlet, the front cover may act as an air guidance member for guiding air towards the hood outlet. Furthermore, the protruding part may prevent, optionally together with other air guidance members, a straight air-flow path between the hood inlets of the first set of hood inlets and second set of hood inlets.

The top cover and bottom cover may be substantially identically shaped such that they can be nested before the housing of the wind hood is assembled. The side walls may also be substantially identically shaped such that they may be nested as well. Additionally or alternatively, the housing of the wind hood may be shaped such that it can be nested with other housings before being installed. By having nestable wind hood housings and / or wind hood housing components, it may be possible to transport them to the customer more space-efficient. The side walls, and inserts or air guidance members when used, may be separately connectable to the housing such that they do not affect the optional nesting properties of the housing.

The wind hood can be made from plastic and for example by an injection moulding or vacuum forming process. Using plastic can result in a sufficiently strong and durable product while remaining relatively lightweight and economical.

The wind hood housing may be oblique to prevent sunlight from passing through the housing and as another option UV-resistant to prevent degradation of material properties such as strength and colour due to the effects of sunlight to which the housing may be exposed in use

The wind hood can further comprising an air filter positioned in or adjacent to at least one of the air-flow paths. The air filter can be arranged to removed particles from air flowing through the filter. More specifically, the air filter or air filters may be positioned in or on the housing, in one or more of the air-flow paths through the housing. As such, air passing over an air-flow path may pass through filter, and particles may be filtered out of the air before the air reaches the ventilation inlet. An air filter may for example be mounted in front of any of the hood inlets or the hood outlet.

The wind hood can further comprise one or more light blocking elements positioned inside the housing for limiting transmission of light between at least one hood inlet of at least one of the first and second set of hood inlets and the hood outlet. As such, a different day-and-night rhythm may be achieved in the ventilated space. Any air guidance member may also act as a light blocking element.

In embodiments, the wind hood is placed over the ventilation inlet of a ventilation inlet in a wall or roof of the ventilated space. Placing the wind hood at least partially over the ventilation inlet limits or restricts wind from directly entering the ventilated space through the ventilation inlet.

As second aspect provides an architectural element for a barn, such as a wall, a door, a window, or a roof. The architectural element comprises a ventilation inlet through the architectural element and is provided with a wind hood according to the first aspect, connected to the architectural element, wherein the ventilation inlet is in fluid communication with the hood outlet of the wind hood. Being in fluid communication, air may flow between the hood outlet of the wind hood and the ventilation inlet of the architectural element.

The architectural element may be provided with an air-flow valve for controlling an air flow through the ventilation inlet, wherein the air-flow valve may be positioned on an opposite side of the architectural element than the wind hood or on the same side of the architectural element than the wind hood. The air-flow valve may be part of a ventilation system of a barn.

At least one hood inlet of the first set and second set of hood inlets can be oriented substantially perpendicular to the architectural element. Preferably, all hood inlets of the first set and second set of hood inlets can be oriented substantially perpendicular to the architectural element. In particular, the hood inlets may be positioned in the left and right sides of the architectural element - wherein left and right are defined as one were standing in front of the architectural element.

The ventilated space may be comprised by a barn for keeping livestock such as chickens, pigs or cows. To ensure good livestock health and development, the climate in such a barn needs to be closely controlled. One way this can be done is by ensuring sufficient ventilation. However, to much ventilation may not be preferred, for example when the air outside the barn is too cold.

For any architectural element with any wind hood, part of the housing of the wind hood may protrude inwards towards the hood outlet.

A third aspect provides a barn for keeping livestock. The barn comprises multiple walls and a roof, at least one of which is an architectural element according to the second aspect. A ventilated space is provided between the walls and the roof.

The walls can be positioned upright in a vertical direction oriented towards the roof. A normal vector of a flow-through area of at least one hood inlet of at least one of the first and second set of hood inlets can be oriented at an angle relative to the vertical direction, in particular an angle of 45 degrees relative to the vertical direction.

At least one of the walls or the roof can comprise a ventilation outlet. The barn can further comprise a ventilation system comprising one or more fans for constituting an air-flow through the at least one ventilation outlet.

Using the ventilation system, air may be forced out of the ventilated space of the barn using for example one or more fans, ventilators, or other air displacement devices, for example placed in the roof of the barn. When air gets transported out of the ventilated space, the pressure inside the ventilated space can become locally lower than the pressure outside the ventilated space. The pressure outside the ventilated space may be the atmospheric pressure, and the pressure difference between the ventilated space and the outside may result in an air flow into the ventilated space, through one or more wind hoods.

It will be appreciated that different options disclosed in conjunction with one of the aspects may be readily applied to embodiments of the other aspects. In particular, any wind hood according to the first aspect may be used for any architectural element and any barn.

The aspects will be further elucidated on the basis of the exemplary embodiments that are represented in the drawings. In the drawings:
Fig. 1A shows in a schematic top view an example of a barn;
Fig. 1B shows the barn in a schematic front view;
Figs. 2A and 2B show different perspective views of a particular embodiment of a wind hood;
Fig. 3A shows a side view of a wall of a barn;
Fig. 3B shows a cross-sectional view over the line A-A shown in Fig. 3A;
Fig. 4 shows an exploded view of a housing of a wind hood;
Figs. 5A-5D show a first comparative numerical example of a wind hood according to the state of the art to a wind hood according to claim 1;
Figs. 6A-6D show the same figures as Figs. 5A-5D except in grey scales.
Figs. 7A-7D show a second comparative numerical example of a wind hood according to the state of the art to a wind hood according to claim 1;
Figs. 8A-8D show the same figures as Figs. 7A-7D except in grey scales.

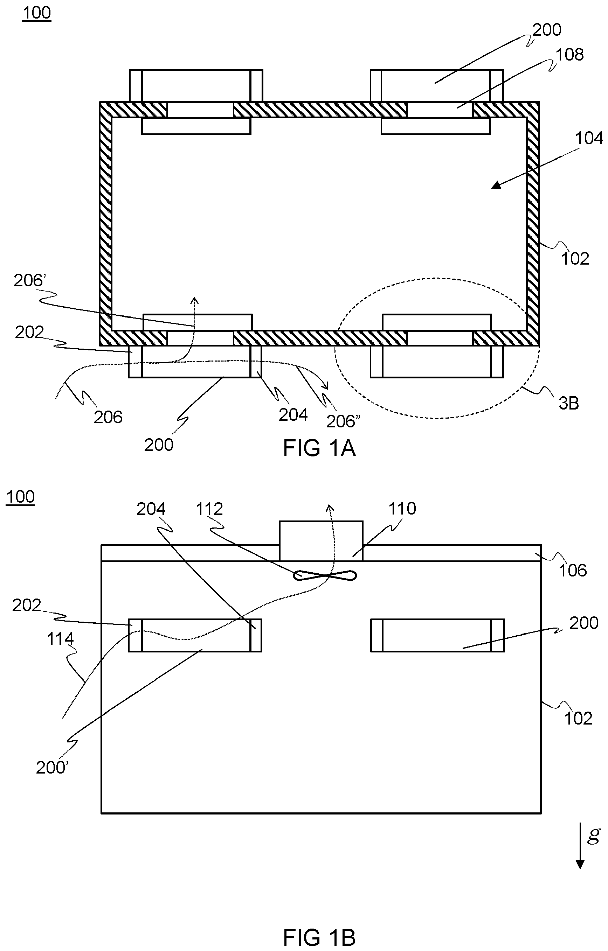

Referring to Fig. 1A, a schematic top view an example of a barn 100 is shown, comprising four walls 102 positioned in a rectangle. Between the walls 102, a ventilated space 104 is provided. Fig. 1B shows the barn 100 in a schematic front view, showing a wall 102 and a roof 106 supported by the walls 102.

As an example, two walls 102 of the barn comprise two ventilation inlets 108 each. The walls are examples of architectural elements. Positioned in front of each ventilation inlet 108 is a wind hood 200.

As an example, a ventilation outlet 110 is provided by the roof 106. A ventilation system comprising a fan 112 is used to constitute an air-flow 114 from outside the barn 100, into the ventilated space 104 through the wind hood 200 and the ventilation inlet 108, and out of the ventilated space 104 through the ventilation outlet 110.

In general, in the figures, an air-flow is indicated with a swivelled dotted arrow, the arrow indicating an example of the direction of the air-flow.

In the top view of Fig. 1A, it is shown that a wind hood 200 comprises a first hood inlet 202 and a second hood inlet 204. As an example, in Fig. 1A, an air-flow 206 is shown flowing into the wind hood 200 via the first hood inlet 202. The air-flow then splits up in to a partial air-flow 206' entering the ventilated space 104, and an excess air-flow 206" exiting the wind hood 200 through the second hood inlet 204.

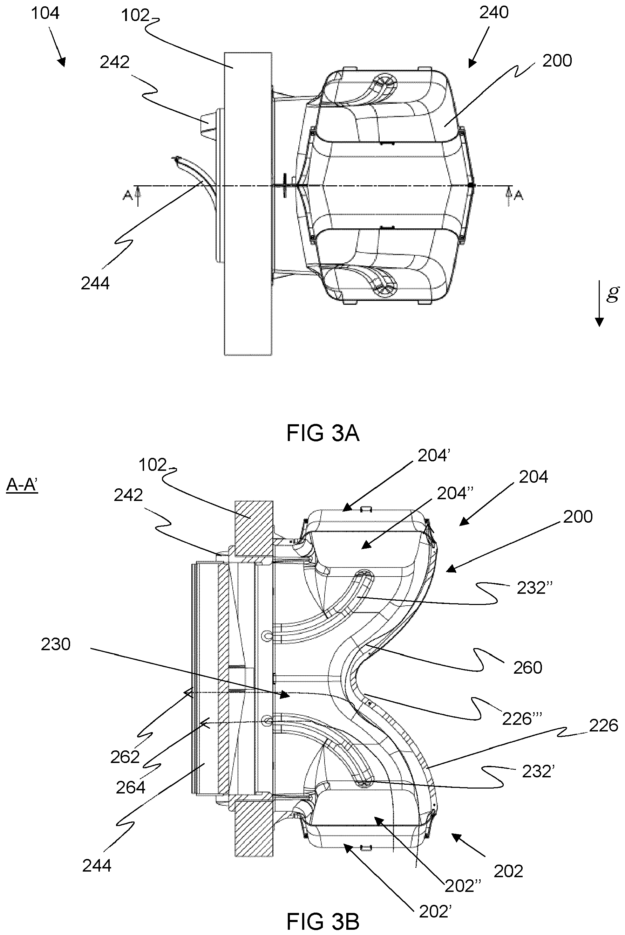

The wind hood 200 will be elaborated on further in the following figures. In particular, the detailed section view of Fig. 3B is indicated in Fig. 1A by the dashed circle.

It will be appreciated that a barn 100 may comprise any number of walls, ventilation inlets, ventilation outlets, and wind hoods. Merely as an option, in the embodiment of Fig. 1A, wind hoods 200 are positioned on opposite walls 102. For clarity of figures 1A and 1B, not all wind hoods are provided with reference numerals.

A wind hood 200 may be placed over a ventilation inlet 108 and may be fixed to the wall 102 using for example plugs, screws, bolts or other fixation materials.

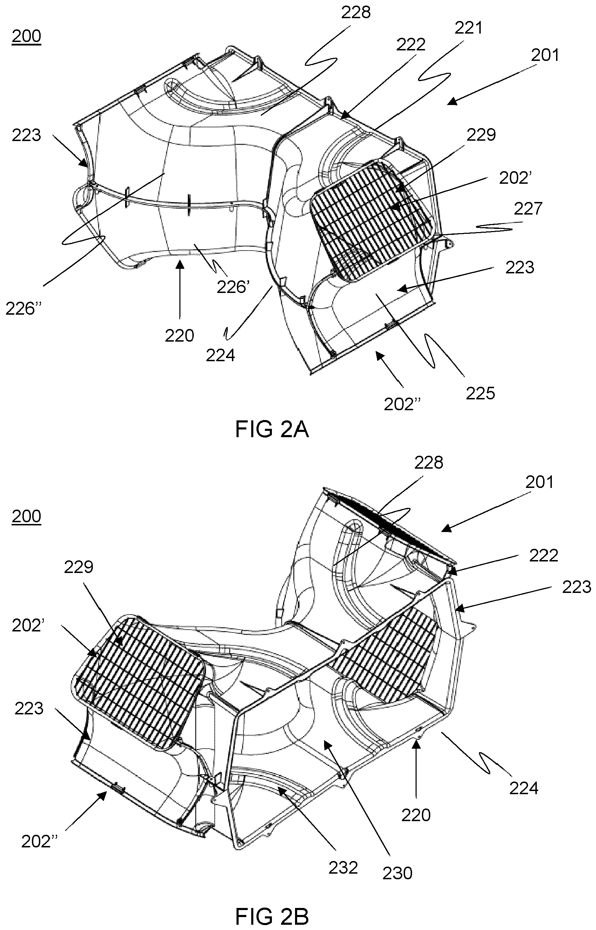

Figs. 2A and 2B show different perspective views of a particular embodiment of a wind hood 200. In particular, Fig. 2A shows a top, right side and a front of the wind hood 200, and Fig. 2B shows a top, right side, and a back of the wind hood 200.

The wind hood 200 comprises a housing 201, which may be formed out of an integral part, or separated connected parts. In the particular example of Figs. 2A and 2B, the housing 201 is formed from a bottom part 220, a top part 222 and side walls 223. The bottom part 220 provides a bottom cover 224, and part of a front cover 226'. The top part 222 provides a top cover 228 and part of the front cover 226". The side walls 223 provide side covers 225. The top cover 228 is positioned opposite to the bottom cover 224. The front cover 226 is positioned opposite to the hood outlet 230.

As a particular option, the bottom part 220 and the top part 222 may be substantially similarly shaped. For example, the same mould may be used to produce the bottom part 220 and the top part 222. The bottom part 220 and the top part 222 may be connected air-tightly.

Fig. 2A and Fig. 2B also show the first set of hood inlets 202. The first set of hood inlets has a first hood inlet 202' and a second hood inlet 202", which is constrained between outer edges of the top cover 228, front cover 226, bottom cover 224 and the side cover 225. The hood outlet 230, shown in Fig. 2B, is constrained between outer edges of the top cover 228 and the bottom cover 224.

As an example, a flow-through area of the first hood inlet 202' corresponds to a substantial part of a upper right side area of the wind hood 200, while the flow-through area of the second hood inlet 202" of the first set of hood inlets 202 corresponds to a substantial part of a lower right-side area of the wind hood 200. Similarly, as another example, a flow-through area of the hood outlet 230 corresponds to a substantial part of a rear area of the wind hood 200. As such, a compact design of the wind hood 200 may be achieved.

The wind hood housing 200 may be made out of any material that is sufficiently strong to be attached to a wall or roof without collapsing and is sufficiently resilient against the weather effects the wind hood is exposed to, such as low temperatures, UV radiation from sun light and impact due to hail. Such a material can be a plastic, more particular a thermoplastic or a thermosetting polymer.

As an option depicted for example in Figs. 2A and 2B, a plurality of protrusions 232 as air guidance members are positioned in the wind hood housing 201. The protrusions 232 in these examples protrude inwards, in to the housing 200 of the wind hood, from the top cover and bottom cover extend between the top part 222 and the bottom part 220. The bottom part 220 and top part 222 may be transported nested into each other.

The protrusions 232 are shown substantially convex, and approximately resembling a quarter circle. The quarter circle corresponds to the feature that the first and second set of hood inlets 202, 204 are positioned perpendicular to the hood outlet 230.

As an option for example visible in Fig. 3B, part of the front cover 226‴ protrudes inwards towards the hood outlet 230. This protruding part forms an air guidance member and is arranged to guide air flow from the hood inlets to the hood outlet 230. Furthermore, by virtue of the protruding part 226''', a straight air-flow path between the first set of hood inlets 202 and the second set of hood inlet 204 is prevented via a curved surface provided by the protruding part, which may provide better aerodynamic properties as a sharp angled surface, as opposed to the curved surface, may introduce a higher built up of pressure inside the wind hood 200. An example of an air-flow path 260 between the first hood inlet 202 and the second hood inlet 204 and guided by the protruding part 226'" of the front cover is depicted in Fig. 3B.

As shown in Fig. 2A, a bottom part 220 and/or a top part 222 may comprise a mounting rim 221 which may be used for mounting the wind hood 200 to a wall or roof. As another option, one or more mounting flanges 227 may be provided at or near a hood inlet such as the first hood inlet 202. Using the mounting flange 227, an air filter may be mounted in front of a hood inlet. Additionally, a grid, or roster, 229 is provided to prevent debris, e.g. leaves or branches, or animals, e.g. birds or small rodents, to enter the wind hood 200. The presence of debris may affect the aerodynamic properties of the wind hood 200 negatively, for example by introducing obstacles that could result in an increased air pressure inside the wind hood 200.

In general, one or more air filters may be positioned in or adjacent to at least one of the air-flow paths provided between the hood outlet and the hood inlets and between any of the hood inlets and another hood inlet. One or more air filters may be positioned outside the housing 202, for example in front of one or more of the first and second hood inlet 202', 202" of the first set of hood inlets 202, the first and second hood inlet 204', 204" of the second set of hood inlets 204 and the hood outlet 230 and may as such be adjacent to an air-flow through the housing 200. It may be preferred to have all or at least a substantial part of an air-flow flowing through an air filter.

When an air filter is positioned outside the housing 202, replacing or maintaining the air filter may be more convenient compared to when an air filter is positioned inside the housing 202. Convenient removal of the air filter may also allow for easier access to the inside of the wind hood 200, which may facilitate cleaning of said inside and of an air-flow valve 254. An air filter inside the housing 202 may however be protected better from outside influences.

Fig. 3A shows a side view of a wall 102 of a barn, with at an outer side 240 a wind hood mounted 200. At an opposite side of the wall 102, i.e. at a side of the ventilated space 104, an air-flow valve 242 is mounted. The air-flow valve 242 comprises a hinged panel 244, which may hinge between a closed position in which no or substantially no flow of air is allowed through the air-flow valve 242 and an open position wherein the panel 244 does not or only partially restricts air flowing through the air-flow valve 242. In Fig. 3A, the panel 244 is shown in an open position.

An example of an air-flow valve is disclosed in EP3142480, which provides a particularly good throw also with a low air-flow through the valve.

Fig. 3B shows a cross-sectional view over the line A-A shown in Fig. 3A. The wind hood 200 shown in Fig. 3B comprises a plurality of protrusions 232' and 232". The first protrusion 232' is associated with the first set of hood inlets 202, as they are positioned in a halve of the wind hood 200 closest to the first set of hood inlets 202. Correspondingly, the second protrusion 232" is associated with the second set of hood inlets 204 .

When wind flows past the wall 102 in a direction from the first set of hood inlets 202 to the second set of hood inlets 204, wind may enter the wind hood 200 via the first or second hood inlet 202', 202" of the first set of hood inlets 202. A first air-flow path 262 is provided between the first hood inlet 202' of the set of hood inlets 202 and the hood outlet 230. An excess air-flow path 260 allows any excess air to flow out of the wind hood 200 via any of the hood inlets 204', 204" of the second set of hood inlets 204. As an example, a second air-flow path 264 is provided between the second hood inlet 202" of the set of first hood inlets 202 and the hood outlet 230.

Although the protrusions have been depicted, in other examples, one or more protrusions may extend fully between a hood inlet and a hood outlet and/or may extend between the bottom part 220 and the top part 222, effectively forming a sheet.

As shown in Fig. 3B, the hood outlet 230 may be positioned between the first set of hood inlets 202 and the second set of hood in 204. The wind hood 200 may even be substantially symmetric in this top section view.

Due to the orientation of the hood inlets 202', 202", 204', 204", light entering the wind hood 200 may be prevented from reaching the hood outlet 230.

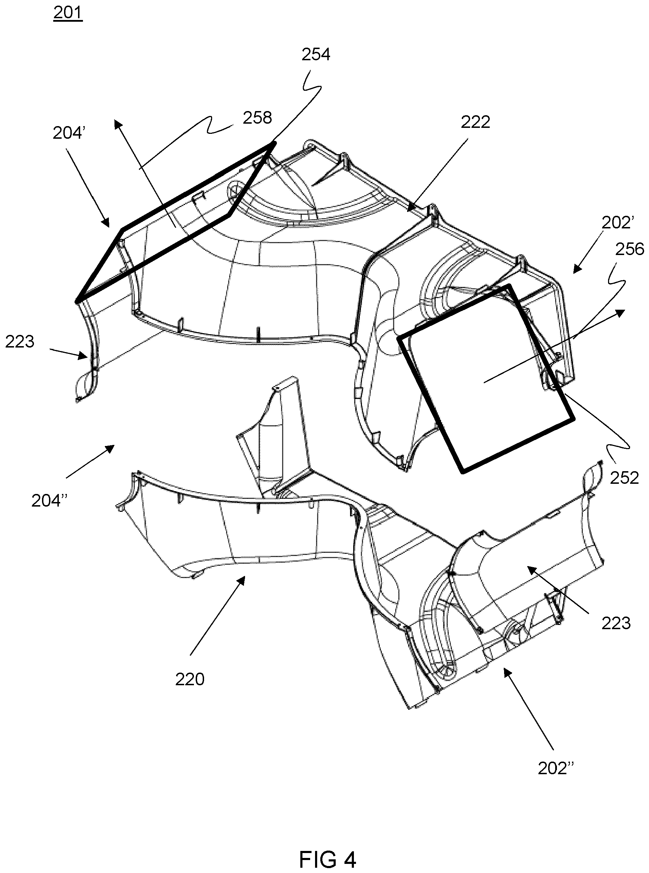

Fig. 4 shows an exploded view of a housing 201 of a wind hood 200. As an example, a perimeter of a first flow-through area 252 of the first hood inlet 202' of the first set of hood inlets and a perimeter of a second flow-through area 254 of the first hood inlet 204' of the second set of hood inlets are illustrated by a squares. The other hood inlets 202", 204" have corresponding and comparable perimeters that have not been depicted. For the first hood inlets 202', 204' of the first and second set of hood inlets 202, 204 the flow through area is delimited by the top part 222 and the corresponding side wall part 223. For the second hood inlets 202", 204" of the first and second set of hood inlets 202, 204 the flow through area is delimited by the bottom part 220 and the corresponding side wall part 223. In use, the flow-through area 252 may also be delimited by the wall or roof to which the wind hood is mounted.

A first normal vector 256 is associated with the flow-through area 252 of the first hood inlet 202' of the first set of hood inlets 202. A second normal vector 258 is associated with the flow-through area 254 of the first hood inlet 204' of the second set of hood inlets 204. Fig. 4 shows that the first set of hood inlets 202 and the second set of hood inlets 204 may face in different directions out of the housing 201 - i.e. the first normal vector 256 and the second normal vector 258 may diverge. In this particular embodiment, the first hood inlets 202', 204' of the first and second set of hood inlets also may face in a different direction out of the housing 201 than the corresponding second hood inlets 202", 204". In other words, all hood inlets face may face out in a different direction out of the housing 201. In the shown example, the normal vector of each flow-through area of each hood inlet is at a 90 degree angle of a neighbouring flow-through area.

In use, the first normal vector 256 and the second normal vector 258 may be approximately at a 45 degree angle relative to a ground surface on which the barn is positioned - i.e. approximately at a 45 degree angle relative to the gravity vector.

In the first and second comparative numerical experiment, the wind hood described in Dutch patent NL2027745 has been compared to a wind hood according to claim 1. More specifically, a wind hood with two opposing wind hood inlets without grid, as disclosed in NL2027745, has been compared to a wind hood comprising four wind hood inlets, wherein a normal vector of the flow-through area of each wind hood inlet is at a 90 degree angle with the normal vector of an adjacent flow-through area and wherein each normal vector is at a 45 degree angle relative to a ground surface.

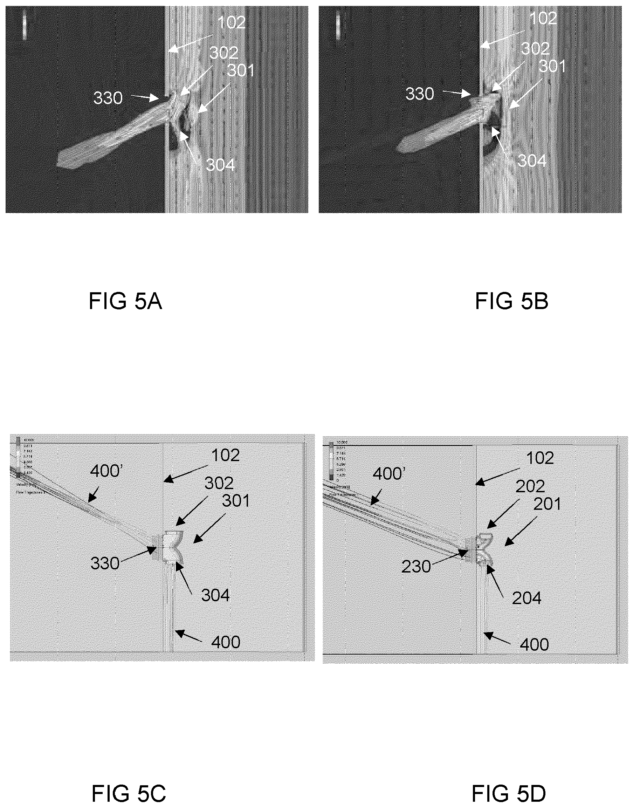

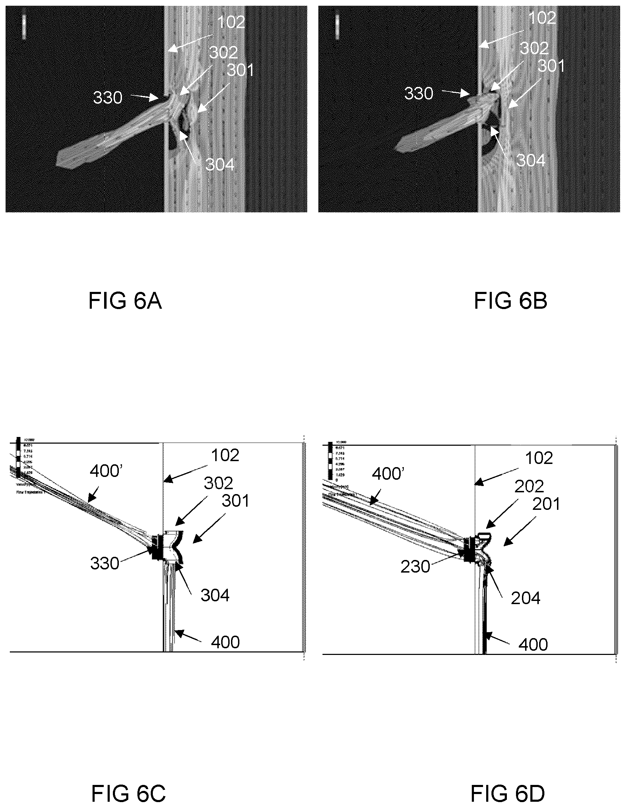

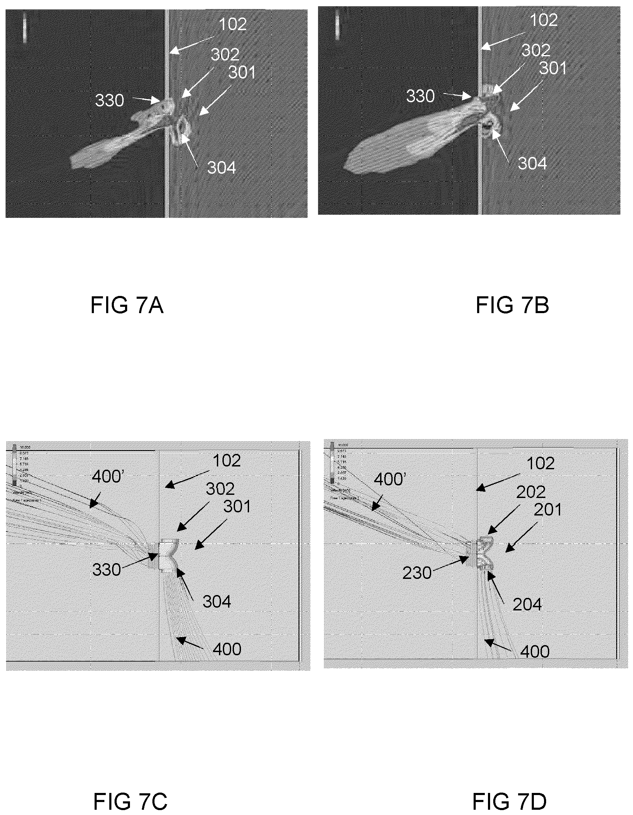

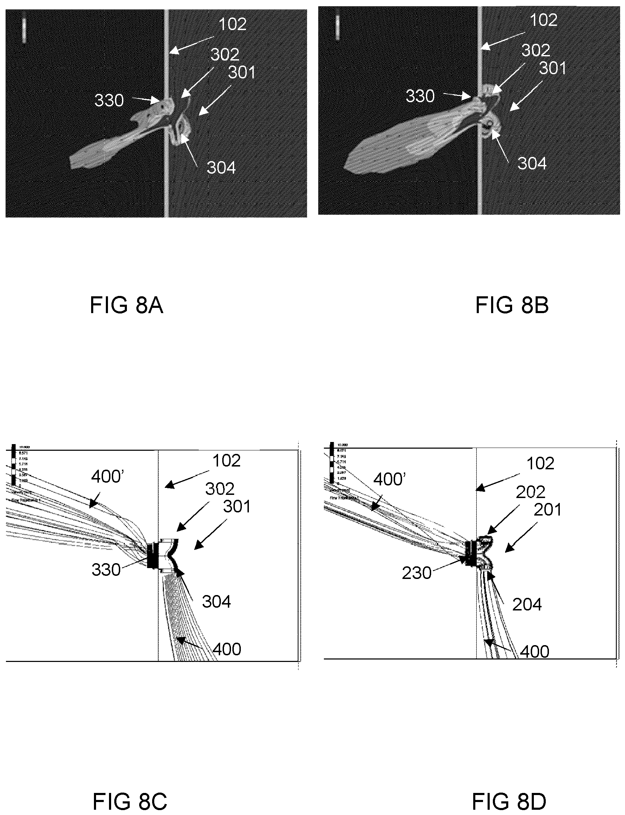

Turning to the first and second comparative numerical experiment in Figs 5A-5D - Figs 8A-8D, which are identical except that the Figs 5A-5D and 7A-7D are in color and Figs 6A-6D and 8A-8D are in grey scale, a top view of a wall 102, on which the two types of wind hoods 201, 301 are mounted is shown. In Figs 5A, 5C, 6A, 6C, 7A, 7C, 8A, 8C the wind hood 301 as disclosed in NL2027745 is mounted, while in Figs 5B, 5D, 6B, 6D, 7B, 7D, 8B, 8D, the wind hood 201 according to the invention is shown. The wind hood 301 of disclosure NL2027745 comprises two wind hood openings 302, 304 provided on opposite sides from the wind hood 301. The wind hood 201 according to claim 1 comprises two sets of wind hood inlets 202, 204, wherein each set comprises a first wind hood inlet and a second wind hood inlet. As stated above, the each hood inlet faces outward of the wind hood 201 in a different direction at a 45 degree angle relative to a ground surface.

In the first numerical experiment, wind flow 400 is simulated parallel to the wall 102 having a speed of 10m/s. In the second numerical experiment, wind flow 400 is simulated as approaching the wall 102 under an angle of 45 degrees while also having a speed of 10m/s. The figures 5A-8D all use a linear scale to depict the wind speed, ranging from 0 m/s to 10m/s. In the colored figures, the linear scale is depicted by various colours. Blue denotes the lowest wind speed, i.e. close to 0 m/s, followed by light blue, green, yellow orange and finally red which represents wind speeds close to 10 m/s. In the grey scaled figures, a comparable scheme is used except instead of using colors, various shades of grey have been used.

Comparing the effect the wind hoods 201, 301 have on the wind flow 400' on the opposite side of the wall 102 than where in the respective wind hood is provided, it can be seen that the wind leaves the wind hood outlet 230 of the wind hood 201 according to the invention in a broader and flow that has lower wind speeds than the wind leaving the outlet 330 of the wind hood 301 according to the state of the art. From the results, it can be seen that the wind hood 201 according to the invention results in a broader, more dispersed, wind flow with lower wind speeds than the wind hood 301 of disclosure NL2027745, which indicates that the wind on the inside of a barn would be perturbed less and a ventilation system of the barn would be disturbed less by wind outside of the barn. Furthermore, it can be inferred from these results that the wind hood according to claim 1 further reduces turbulence and pressure built up in the wind hood than the state of the art.

In the description above, it will be understood that when an element such as layer, cover, insert, member, or part is referred to as being "on" or "onto" another element, the element is either directly on the other element, or intervening elements may also be present.

Furthermore, aspects may also be embodied with less components than provided in the embodiments described here, wherein one component carries out multiple functions. Just as well may the invention be embodied using more elements than depicted in the Figures, wherein functions carried out by one component in the embodiment provided are distributed over multiple components.

It is to be noted that the figures are only schematic representations of embodiments and are given by way of non-limiting examples. For the purpose of clarity and a concise description, features are described herein as part of the same or separate embodiments, however, it will be appreciated that combination of all or some of the features described are also envisioned.

Within the present disclosure, at least the following numbered embodiments are envisioned, which can be readily combined with further features and options as disclosed herein:
1. A wind hood for a ventilation inlet of a ventilated space, the wind hood comprising a housing, wherein the housing comprises:
   - a hood outlet;
   - a first set of hood inlets comprising two hood inlets;
   - a second set of hood inlets comprising two hood inlets;
   wherein at least one air-flow path is provided between:
   - the hood outlet and at least one of the hood inlets of at least one of the first and second set of hood inlets;
   - at least one hood inlet of the at least one of the first and second set of hood inlets and at least one other hood inlet of the first and second set of hood inlets.
2. The wind hood according to embodiment 1, wherein the first set of hood inlets and the second set of hood inlets face in different directions out of the housing.
3. The wind hood according to embodiment 1 or 2, wherein the hood inlets of at least one of the first and second set of hood inlets face in different directions out of the housing, preferably in different directions that are substantially perpendicular relative to each other.
4. The wind hood according to any of the embodiments 1-3, wherein a normal vector of a flow-through area of at least one hood inlet of at least one of the first and second set of hood inlets is oriented at an angle relative to a vertical direction and relative to a horizontal direction.
5. The wind hood according to any one of the embodiments 1-4, wherein the hood outlet is provided between the first set of hood inlets and the second set of hood inlets.
6. The wind hood according to any one of the embodiments 1-5, wherein at least one hood inlet of the first and second set of hood inlets is oriented at an angle relative to the hood outlet, and wherein the wind hood further comprises an air guidance member for guiding air between the at least one hood inlet of the first and second set of hood inlets and the hood outlet.
7. The wind hood according to any one of embodiments 1-6, wherein:
   - the housing comprises a top cover, a bottom cover opposite to the top cover, two side walls provided opposite of each other, wherein each of the two side walls is provided between a corresponding set of hood inlets; and
   - the hood outlet is positioned opposite a front cover between the top cover and the bottom cover.
8. The wind hood according to embodiment 7, wherein at least part of the front cover protrudes into the housing towards the hood outlet.
9. The wind hood according to any one of embodiments 6-8, wherein the top cover and bottom cover are substantially identically shaped, and wherein preferably the side walls are substantially identically shaped.
10. The wind hood according to any one of embodiments 1-9, further comprising one or more light blocking elements positioned inside the housing for limiting transmission of light between at least one hood inlet of the first and second set of hood inlets and the hood outlet.
11. The wind hood according to any one of embodiments 1-10, further comprising an air filter positioned in or adjacent to at least one of the air-flow paths.
12. The wind hood according to any one of embodiments 1-11, wherein the housing is mountable to a wall.
13. The wind hood according to any one of embodiments 1-12, wherein a flow-through area of the hood inlets of the first set of hood inlets and a flow-through area of the hood inlets of the second set of hood inlets are essentially the same.
14. The wind hood according to any one of embodiments 1-13, wherein part of the housing opposite the hood outlet protrudes inwards towards the hood outlet.
15. Architectural element for a barn, such as a wall or a roof, comprising a ventilation inlet through the architectural element and provided with a wind hood according to any of the preceding embodiments, connected to the architectural element, wherein the ventilation inlet is in fluid communication with the hood outlet of the wind hood.
16. The architectural element according to embodiment 15, further provided with an airflow valve for controlling an air flow through the ventilation inlet, wherein the air-flow valve is positioned on an opposite side of the architectural element than the wind hood.
17. The architectural element according to any one of embodiments 15-16, wherein at least one hood inlet of the first set of hood inlets and the second set of hood inlets is oriented substantially perpendicular to the architectural element.
18. The architectural element according to any one of embodiments 15-17, wherein the architectural element is a wall, and the housing of the wind hood is mounted to the wall.
19. The architectural element according to embodiment 18, wherein a normal vector of a flow-through area of at least one hood inlet of at least one of the first and second set of hood inlets is oriented at an angle relative to a vertical direction and relative to a horizontal direction.
20. The architectural element according to embodiment 19, wherein the angle relative to the vertical direction and relative to the horizontal direction is 45 degrees.
21. The architectural element according to any one of embodiments 15-20, wherein part of the housing of the wind hood protrudes inwards towards the hood outlet.
22. A barn for keeping livestock, comprising multiple walls and a roof, at least one of which is an architectural element according to any of the embodiments 15-21, wherein a ventilated space is provided between the walls and the roof.
23. The barn according to embodiment 22, wherein the walls are positioned upright in a vertical direction oriented towards the roof, and a normal vector of a flow-through area of at least one hood inlet of at least one of the first and second set of hood inlets is oriented at an angle relative to the vertical direction, in particular an angle of 45 degrees relative to the vertical direction.
24. The barn according to embodiment 22 or 23, wherein at least one of the walls or the roof comprises a ventilation outlet, the barn further comprising a ventilation system comprising one or more fans for constituting an air-flow through the at least one ventilation outlet.

## Claims

1. A wind hood for a ventilation inlet of a ventilated space, the wind hood comprising a housing, wherein the housing comprises:
- a hood outlet;
- a first set of hood inlets comprising two hood inlets;
- a second set of hood inlets comprising two hood inlets;
wherein at least one air-flow path is provided between:
- the hood outlet and at least one of the hood inlets of at least one of the first and second set of hood inlets;
- at least one hood inlet of the at least one of the first and second set of hood inlets and at least one other hood inlet of the first and second set of hood inlets.

2. The wind hood according to claim 1, wherein the first set of hood inlets and the second set of hood inlets face in different directions out of the housing.

3. The wind hood according to claim 1 or 2, wherein the hood inlets of at least one of the first and second set of hood inlets face in different directions out of the housing, preferably in different directions that are substantially perpendicular relative to each other.

4. The wind hood according to any of the claims 1-3, wherein a normal vector of a flow-through area of at least one hood inlet of at least one of the first and second set of hood inlets is oriented at an angle relative to a vertical direction and relative to a horizontal direction.

5. The wind hood according to any one of the claims 1-4, wherein the hood outlet is provided between the first set of hood inlets and the second set of hood inlets.

6. The wind hood according to any one of the claims 1-5, wherein at least one hood inlet of the first and second set of hood inlets is oriented at an angle relative to the hood outlet, and wherein the wind hood further comprises an air guidance member for guiding air between the at least one hood inlet of the first and second set of hood inlets and the hood outlet; and/or
wherein the wind hood further comprises one or more light blocking elements positioned inside the housing for limiting transmission of light between at least one hood inlet of the first and second set of hood inlets and the hood outlet.

7. The wind hood according to any one of claims 1-6, wherein:
- the housing comprises a top cover, a bottom cover opposite to the top cover, two side walls provided opposite of each other, wherein each of the two side walls is provided between a corresponding set of hood inlets; and
- the hood outlet is positioned opposite a front cover between the top cover and the bottom cover,
in particular wherein the top cover and bottom cover are substantially identically shaped, and wherein preferably the side walls are substantially identically shaped.

8. The wind hood according to claim 7, wherein at least part of the front cover protrudes into the housing towards the hood outlet.

9. The wind hood according to any one of claims 1-8, wherein the housing is mountable to a wall, in particular a wall of a barn.

10. The wind hood according to any one of claims 1-9, wherein a flow-through area of the hood inlets of the first set of hood inlets and a flow-through area of the hood inlets of the second set of hood inlets are essentially the same.

11. The wind hood according to any one of claims 1-10, wherein part of the housing opposite the hood outlet protrudes inwards towards the hood outlet.

12. Architectural element for a barn, such as a wall or a roof, comprising a ventilation inlet through the architectural element and provided with a wind hood according to any of the preceding claims, connected to the architectural element, wherein the ventilation inlet is in fluid communication with the hood outlet of the wind hood,
preferably wherein the architectural element is further provided with an airflow valve for controlling an air flow through the ventilation inlet, wherein the air-flow valve is positioned on an opposite side of the architectural element than the wind hood and/or wherein at least one hood inlet of the first set of hood inlets and the second set of hood inlets is oriented substantially perpendicular to the architectural element.

13. The architectural element according to claim 12, wherein the architectural element is a wall, and the housing of the wind hood is mounted to the wall.

14. The architectural element according to claim 13, wherein a normal vector of a flow-through area of at least one hood inlet of at least one of the first and second set of hood inlets is oriented at an angle relative to a vertical direction and relative to a horizontal direction, in particular wherein the angle is 45 degrees relative to the vertical direction.

15. A barn for keeping livestock, comprising multiple walls and a roof, at least one of which is an architectural element according to any of the claims 12-14, wherein a ventilated space is provided between the walls and the roof, and in particular wherein at least one of the walls or the roof comprises a ventilation outlet, the barn further comprising a ventilation system comprising one or more fans for constituting an air-flow through the at least one ventilation outlet,
preferably wherein the walls are positioned upright in a vertical direction oriented towards the roof, and a normal vector of a flow-through area of at least one hood inlet of at least one of the first and second set of hood inlets is oriented at an angle relative to the vertical direction, in particular an angle of 45 degrees relative to the vertical direction.
